# EUROPEAN PATENT APPLICATION

(11) **EP 0 685 482 A1**
(43) Date of publication of application: **06.12.1995**
(21) Application number: 95303641.5
(22) Date of filing: 30.05.1995
(51) Int. Cl.: C07F 7/08, C07F 7/14

(54) **Optimized process for inert fluorinated silanes**

(30) Priority: 01.06.1994 FR 9406677
(71) Applicant: DOW CORNING CORPORATION, Midland Michigan 48686-0994 (US)
(72) Inventor: Boutevin, Bernard, F-34000 Montpellier (FR); Guida-Pietrasanta, Francine, F-34000 Montpellier (FR); Ratsimiehety, Amédée, F-34053 Montpellier Cedex 1 (FR); Caporiccio, Gerardo, I-20149 Milan (IT)
(74) Representative: Laredo, Jack Joseph

(57) **Abstract**

The present invention provides a method for preparing a fluorinated silane having the formula R¹₄Si (I) or the formula R²₃Si(R³SiR⁴₂)_{z}R³SiR²₃ (II) said method comprising reacting the corresponding halide-functional or alkoxy-functional silane with lithium aluminum hydride or sodium borohydride to form a hydride-functional silane and then reacting the latter with a vinyl-terminated fluorotelomer or an allyl-terminated fluorotelomer, wherein at least three R₁ of said silane (I), at least two of the R² and at least one R⁴ of said silane (II) are selected from derivatives of fluorotelomers or fluorocotelomers, z has an average value of 0 to 4 and R³ is a derivative of an alkylene-terminated telechelic divalent telomer or cotelomer.

## Description

This invention relates to a method for preparing particular fluorinated silanes. More particularly, it provides a method wherein the reactive groups on certain silanes are first converted to silicon hydride groups, by reaction with lithium aluminum hydride and next the silicon hydride groups are reacted with a vinyl- or allyl-functional organic compound.

Certain chemically inert, fluorinated organosilicon compounds find utility as hydraulic fluids, release materials, lubricants and as components in greases. An example is disclosed in US-A 5,110,973, said patent being assigned to the assignee of the claimed invention. These compounds combine the desirable properties of tetraalkylsilanes and organic polymers containing fluorinated substituents and they represented a new class of materials wherein a majority of the organic groups bonded to silicon are derived from alkylene-terminated telomers and/or cotelomers of selected fluoroolefins. However, the methods suggested for preparing these compounds rely largely on the conversion of the corresponding halogen-functional perfluoroalkyl halide (iodide or bromide) to a metal (magnesium or lithium) compound. Unfortunately, metalloorganic methods have been found to be relatively inefficient when the silicon atom has two or three alkyl groups attached thereto, such that they do not provide a high yield of the desired, further alkylated products. For instance, when an intermediate containing the structure -Si(Cl₂)-R³-Si(Cl₂)-, in which R³ is a divalent organic group, is reacted with a Grignard reagent of the form R_{f}MgI, in which R_{f} is a fluorinated alkyl group, the yield is quite poor if the R_{f} group is large. Furthermore, when each silicon atom of the intermediate is already bonded to one such R_{f} group, as in structures of the type -Si(Cl)(R_{f})-R³-Si(Cl)(R_{f})-, reaction with a second Grignard reagent of the form R²_{f}MgI to add the group R²_{f} is still more difficult, even if the group is small and the reaction is carried out under the preferred low temperature conditions. This situation is somewhat improved when the perfluoroalkyl group is added by employing a lithium compound of the type LiR_{f} but is still relatively inefficient. The observed yields are not much improved when the desired product is of the form R¹₄Si wherein R¹ is a monovalent group derived from a fluorotelomer or fluorocotelomer, as defined in the above patent.

It has now been found that the fluorinated organosilicon compounds taught by US-A 5,110,973 can be produced in greater yield by carefully selecting the proper reaction sequence. In particular, the yield is significantly improved when the halogen or alkoxy groups of the above described silane intermediates, substituted with two or three fluoroalkyl groups, are first converted to silicon hydride groups by reaction with lithium aluminum hydride or sodium borohydride and the silicon hydride groups are subsequently reacted with a vinyl- or allyl-functional fluorotelomer. Moreover, the method of our claimed invention allows the efficient preparation of specific novel fluorinated organosilicon compounds having surprisingly low glass transition temperatures, typically below -45°C. and some as low as -73°C., making these compounds particularly suitable for low temperature hydraulic and lubrication applications.

The present invention therefore introduces a method for preparing a fluorinated silane having the formula R¹₄Si (I) said method comprising:
(A) reacting a silane of the formula R¹_{4-w}R⁸_{w}Si (III) with lithium aluminum hydride or sodium borohydride to form a silane of the formula R¹_{4-w}H_{w}Si (V) ; and
(B) reacting said silane (V) with a compound selected from vinyl-terminated fluorotelomers or allyl-terminated fluorotelomers, wherein at least three R¹ of said silane (I) are selected from derivatives of fluorotelomers or fluorocotelomers, w is 1 or 2 and R⁸ is selected from Cl, F and OCH₃ radicals.

The invention further provides a method for preparing a fluorinated silane having the formula R²₃Si(R³SiR⁴₂)_{z}R³SiR²₃ (II) comprising:
(A) reacting a silane of the formula R⁸_{w}R²_{3-w}Si(R₃-SiR⁴₂)_{z}R³SiR⁸_{w}R²_{3-w} (IV) with lithium aluminum hydride or sodium borohydride to form a silane of the formula H_{w}R²_{3-w}Si(R³SiR⁴₂)_{z}R³SiR²_{3-w}H_{w} (VI); and
(B) reacting said silane (VI) with a compound selected from vinyl-terminated fluorotelomers or allyl-terminated fluorotelomers, wherein at least two of the R² and, when z ≠ 0, at least one R⁴ of said silane (II) are independently selected from derivatives of fluorotelomers or fluorocotelomers, w and R⁸ have their previously defined meanings, z has an average value of 0 to 4 and R³ is a derivative of an alkylene-terminated telechelic divalent telomer or cotelomer.

The present invention also relates to species of formulas (I) and (II) prepared by the above described methods.

In formula (I), at least three R¹ groups (I) are monovalent radicals derived from telomers or cotelomers of fluorinated organic monomers and are independently selected from (i) alkylene-terminated monovalent homotelomers selected from telomers of chlorotrifluoroethylene, tetrafluoroethylene, vinylidene fluoride and trifluoroethylene; (ii) cotelomers selected from cotelomers of chlorotrifluoroethylene or hexafluoropropene; (iii) cotelomers of tetrafluoroethylene and one member selected from hexafluoropropene, 1-H-pentafluoropropene and 2-H-pentafluoropropene; (iv) cotelomers of vinylidene fluoride or one member selected from said hexa- and pentafluoropropenes; (v) cotelomers of tetrafluoroethylene and a perfluoroalkyl vinyl ether; (vi) cotelomers of tetrafluoroethylene, chlorotrifluoroethylene and a perfluoroalkyl vinyl ether; and (vii) cotelomers of tetrafluoroethylene, chlorotrifluoroethylene and hexafluoropropene.

These telomers and cotelomers are bonded to the silicon atom in the corresponding formulas (i.e., formulas I, III and V) by a divalent, linear, non-halogenated, alkylene radical containing 2, 3 or 4 carbon atoms. Any remaining R¹ groups in said formulas (i.e., those which are not the above telomers or cotelomers) are independently selected from alkyl radicals containing from 1 to 4 carbon atoms, phenyl, perfluoroalkyl-substituted phenyl and fluoroalkyl radicals of the general formula R⁵(CH₂)_{y}-in which R⁵ represents a linear or branched perfluoroalkyl radical having from 1 to 6 carbon atoms and y is 2, 3 or 4. In formulas III and V, w is 1 or 2, preferably 1. In formula III, R⁸ is selected from Cl, F and OCH₃ radicals and is preferably F.

Likewise, in formula II, at least two of the R² groups and at least one of the R⁴ groups are independently selected from the same telomers and cotelomers described for R¹. These telomers and cotelomers are again bonded to the silicon atoms in the corresponding formulas (formulas II, IV and VI) by a divalent alkylene radical and any remaining R² or R⁴ groups are independently selected from the alkyl radicals, phenyl, perfluoroalkyl-substituted phenyl and fluoroalkyl radicals described for formula I. In formulas IV and VI, w is 1 or 2, preferably 1. In formula IV, R⁸ is selected from Cl, F and OCH₃ radicals, preferably F. In formulas II, IV and VI, z has an average value of 0 to 4, preferably 0 or 1 and R³ is an alkylene-terminated telechelic divalent fluorinated telomer or cotelomer represented by the formula: -CₘH₂ₘ-(R⁶)CFCF₂-(CₚF₂ₚ)_{q}-(C₂ClF₃)ᵣ-R_{f}-(C₂ClF₃)ᵣ-(CₚF₂ₚ)_{q}-CF₂CF(R⁶)-CₘH₂ₘ- in which Rf represents a perfluoroalkylene radical containing from 2 to 6 carbon atoms, R⁶ is fluorine or trifluoromethyl, m is 2 or 3, with the proviso that -CₘH₂ₘ-represents a linear radical, the value of p is 2 or 3, r is 0 or a positive integer from 1 to 6, q is 0 or a positive integer from 1 to 6 and (r+q) is from 2 to 12.

The telomers and cotelomers of this invention are known in the art and may be prepared by the telomerization or cotelomerization of fluorine-containing monomers, said telomerization being initiated by bromo- or iodo-substituted telogens, as detailed in US-A 5,110,973. For example, procedures for the telomerization of tetrafluoroethylene (TFE) are well known, Hudlicky, "Organic Fluorine Compounds", Ed. McMillan, page 347, 1962. Other procedures to obtain telomers and cotelomers for the silanes of the present invention are reported in US-As 5,110,973 and 4,731,170.

Some of our telomers and cotelomers are preferably prepared from fluorinated iodide intermediates having 4, 6 or 8 carbon atoms (e.g., C₄F₉I, C₆F₁₃I or C₈F₁₇I). These compounds are available from PCR, Inc., Gainesville, Florida. The telomers may also be prepared by thermal telomerization of TFE from CF₃CF₂I at temperatures of 180° to 250°C. using a molar ratio of CF₃CF₂I/TFE of 2 to 5. The telogen and the unreacted monomer are recovered and the mixture of telomers is separated by distillation or used as a mixture for further reaction. Some of the telechelic telomer iodides of the type I(C₂F₄)₂I, I(C₂F₄)₃I and I(C₂F₄)₄I are also available from PCR or are obtained by methods of US-A 4,731,170 from TFE and the telogen IC₂F₄I, the latter being obtained by reacting I₂ and TFE at 130° to 160°C. The telechelic diiodo fluoro telomers may also be endcapped with hexafluoropropene (HFP) by thermal addition at 200 to 240°C. to convert them to structures of the form I(C₃F₆)_{q},(C₂F₄)_{q}I, where q = 2, 3, 4 and q' = 1, 2.

Telomers such as CF₃CF₂C₂F₄CF₂CF(CF₃)I are obtained from C₄F₉I by thermal addition of HFP at 240°C. Telomers such as C₂F₅C₂F₄(CH₂CF₂)ₙCF₂CF(CF₃)I, where n= 1 or 2, are obtained from C₄F₉I by thermal addition of CH₂=CF₂ at 200°C., followed by addition of HFP at 240°C. Telomers such as F(CF₂-CFCl)ₙCF₂CF(CF₃)I, where n = 1 to 3, are preferably obtained by thermal telomerization of CTFE using the telogen CF₃CFClI at 110° to 150°C. This telogen is obtained, together with CF₂ClCF₂I, from the addition of IF₅ and iodine to CTFE at 20° to 100°C. Upon distilling the telomer from the unreacted CF₂ClCF₂I, which is inert under these conditions, the telomer of CTFE may be reacted with HFP at 180° to 230°C. The telomer CF₃CF(Cl)CF₂CF(CF₃)I is also of interest in the invention.

The above described telomers (iodo-fluorotelomers) are endcapped by groups selected from -CH₂CH₂I, -CH=CH₂, - CH₂-CH=CH₂ or -CH₂CH₂CH₂I. To endcap by the -CH₂CH₂I group, the iodo-fluorotelomers are reacted with ethylene in the presence of CuCl or CuI, also preferably in the presence of ethanolamine and solvent, such as t-butyl alcohol or acetonitrile, at 110° to 180°C. according to the procedure described by D. Burton, J. Org. Chem., 35(5), p. 1339, 1970. The 1,1,2,2 tetrahydro-1-iodo terminated fluorotelomers thus obtained are used to prepare Grignard reagents for the alkylation of silicon-halides according to this invention.

The 1,1,2,2-tetrahydro-1-iodo terminated fluorotelomers can also be transformed to corresponding telomers having vinyl terminal groups by the dehydro-iodination reaction using bases such as KOH in ethyl alcohol (US-A 5,110,973). The same procedure can be followed to obtain telechelic telomers of the divinyl type, such as CH2=CH-(C₂F₄)ₙCH=CH₂ and the like, according to the disclosure of US-A 5,110,973.

Allyl-terminated derivatives may be obtained by reaction of such compounds as C₄F₉CH₂CF₂CF₂-CF(CF₃)I or C₂F₅(C₂F₄)₂CF₂CF(CF₃)I with allyl acetate in the presence of benzoyl peroxide at a temperature of 70° to 100°C. and by subsequently reacting the adduct with Zn in alcoholic solvents at 25° to 80°C.

According to our method, hydrosilanes V and VI are the preferred intermediates used in the preparation of the products I and II, respectively, wherein the former structures are reacted with fluoro hydroolefins (vinyl or allyl terminated fluorotelomers). In this method, compound III or compound IV is preferably first obtained by reacting the telomeric or cotelomeric fluoroalkylhalide of the type R¹X (X = Br or I, preferably I, and R¹ has its previously defined meaning) with magnesium to form a Grignard reagent. This Grignard reagent is then reacted with a silicon halide or silicon alkoxide intermediate to form the respective intermediates V and VI. This intermediate may be exemplified by such structures as: SiCl₄, HSiCl₃, CH₃Si(OCH₃)₃, CF₃C₂H₄SiCl₃, CF₃C₂H₄Si(OCH₃)₃, C₆F₁₃C₂H₄SiCl₃ (obtained by hydrosilyation of C₆F₁₃CH=CH₂ with HSiCl₃), CH₃SiCl₂-C₂H₄C₆F₁₂C₂H₄-SiCl₂CH₃ (prepared by hydrosilylation of CH₂=CH-C₆F₁₂CH=CH₂ with CH₃Si(H)Cl₂) and CF₃C₂H₄SiCH₃(Cl)-C₂H₄-C₆F₁₂-C₂H₄SiCH₃(Cl)-C₂H₄CF₃.

When the fluoroalkyl silane III or IV is a chloride or an alkoxide (i.e., R⁸ in III or IV is either Cl or OCH₃, respectively), it is preferred to convert the chloride or alkoxide to the corresponding fluoride (i.e., R₈ = F) before reacting the fluoroalkyl silane with lithium aluminum hydride or sodium borohydride to form the hydrosilanes V or VI. The conversion of the fluoroalkyl silane chloride or alkoxide to the corresponding fluoride is accomplished via a metathesis reaction using an aqueous-alcoholic solution of HF. This metathesis reaction is essentially quantitative and the resultant fluoralkyl silane fluorides are easily isolated as essentially 100% pure components. Additionally, these fluoroalkyl silane fluorides are non-hydrolyzable and are much more reactive with the above Grignard iodides than the corresponding fluoroalkyl silane chlorides or alkoxides. Thus, it is typically found that the Grignard alkylation of the fluoroalkyl silane shows conversions in the range of 50 to 90%.

The fluoroalkyl silane fluorides (III or IV) wherein R₈ is F are then reacted with LiAlH₄ (preferred) or sodium borohydride, in ethyl ether under reflux conditions to obtain the corresponding monohydro or dihydrosilane of structure V or VI, respectively, in practical quantitative yield (at least 95%).

The monohydro or dihydrosilanes (V or VI) are then reacted with vinyl-terminated fluorotelomers or allyl-terminated fluorotelomers according to the instant method to provide the silanes I or II, respectively. This addition reaction is facilitated by organic peroxides or, preferably, by platinum-based catalysts. Preferably, Pt supported on carbon or more desirably as a 10 to 25% solution of H₂PtCl₆·6H₂O in isopropanol, is employed, such that there are from 10⁻² to 10⁻⁵ parts of Pt for each part of silane (molar basis). This reaction can be carried out at a temperature of 50° to 150°C., preferably at 80 to 120°C. and preferably under a partial pressure of oxygen, as is common practice in the art for such addition reactions.

Some of the preferred schemes according to our invention are illustrated as follows.

### Preparation of halosilane intermediates - Schemes (i)

R¹X + Mg R¹MgX (X = Br, preferably I)
R¹MgX + SiCl₄ R¹₄₋ᵥSiClᵥ (v = 1, 2, 3)
R¹₄₋ᵥSiClᵥ + HF R¹₄₋ᵥSiFᵥ (v = 1, 2, 3)
R¹MgX + HSiCl₃ R¹₃₋ᵥ,-SiHClᵥ, (v' = 0, 1, 2)
R¹MgX + R¹Si(OCH₃)₃ R¹₂Si(OCH₃)₂
R¹₂Si(OCH₃)₂ + HF R¹₂SiF₂
wherein R¹ is selected from the following groups
CF₃C₂H₄- (A)
C₂F₅(C₂F₄)_{q}C₂H₄- (B)
C₂F₅(C₂F₄)_{q}CF₂CF(CF₃)-C₂H₄- (C)
(CF₃)₂CFC₂H₄- (D)
C₄F₉(CH₂CF₂)ₚCF₂-CF(CF₃)C₂H₄- (E)
C₄F₉(CH₂CF₂)ₚCF₂-CF(CF₃)CH₂-CH₂CH₂- (F)
C₂F₅(C₂F₄)_{q}-CH₂CH₂CH₂- (G)
F(CF₂CFCl)ₚ-CF₂CF(CF³)C₂H₄- (H)
wherein q = 1, 2 or 3 and p = 1, 2 or 3. Thus, specific examples of the above intermediates of the type R¹₄₋ᵥSiXᵥ, where X = Cl, F or of the type R¹₃₋ᵥSiHClᵥ, include (B)₃SiH; (D)₃SiH; (B)₂SiX₂; (B)₃SiX; (A)(B)₂SiX; (A)(C)₂SiX; (A)(B)SiX₂; (B)(D)₂SiX; and (B)(C)₂SiX, wherein (A), (B), (C) and (D) represent the above described examples of R¹ groups.

### Reaction of Intermediate with Hydride Compound - Schemes (ii)

Structures of the type III, where R⁸ = X = Cl, F, are reacted with LiAlH₄ to give structures of type V, as defined above. Likewise, structures of the type IV (where R⁸ = X = Cl, F) are reacted with LiAlH₄ to give structures of type VI.

### Reaction of Hydrides with Fluoroolefins -- Schemes (iii)

Hydrosilanes of the type HSiCl₃; type V (where w = 1); type R¹_{4-w}H_{w}Si (where w=1, 2); type VI (where w = 1, 2) are reacted with fluoroolefins of the type:
(L) CF₃-CH=CH₂
(M) C₂F₅(C₂F₄)_{q}CH=CH₂
(N) C₂F₅(C₂F₄)_{q}-CF₂CF(CF₃)CH=CH₂
(O) C₂F₅(C₂F₄)_{q}-CH₂CH=CH₂
(P) C₂F₅(C₂F₄)_{q}-CF₂CF(CF₃)CH₂-CH=CH₂
(Q) (CF₃)₂-CF-CH=CH₂
(R) F(CF₂CFCl)ₚCF₂CF(CF₃)CH=CH₂
(S) C₂F₅(C₂F₄)_{q}(CH₂CF₂)ₚCF₂-CF(CF₃)CH=CH₂
(T) C₂F₅(C₂F₄)_{q}(CH₂CF₂)ₚCF₂-CF(CF₃)CH₂-CH=CH₂
wherein q = 1, 2 and p = 1, 2.
The hydrosilanes obtained by this scheme (iii)
are of the type: (H)SiCl₃; (A)(B)SiH₂; (A)(B)₂SiH; (A)(C)₂SiH; (A)(D)₂SiH; (B)₃SiH; (B)(C)₂SiH; (B)(D)₂SiH; and (B)₂(F)SiH, wherein the letters in parentheses represent groups derived from the above fluoroolefins.

In a similar manner, the hydrides can be reacted with telechelic alpha, omega diolefins of the type:
(U) CH₂=CH-(C₂F₄)_{q}CH=CH₂ where q = 2, 3, 4
(W) CH₂=CH(CF₃CF-CF₂)ₚ(C₂-F₄)_{q}CF₂-CF(CF₃)CH=CH₂
(X) CH₂=CH-CH₂(CF₃CF-CF₂)ₚ(C₂F₄)CF₂CF(CF₃)CH₂-CH=CH₂
where q = 1, 2, 3 or 4 and p = 0 or 1.

Telechelic hydrosilanes are obtained by schemes of the type (as a non-limiting example): 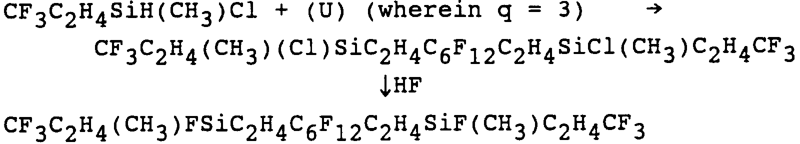
By hydrosilylation of said olefins from L to X with the hydrosilanes mentioned, silanes of the type I and II are obtained. Some preferred schemes are:
(c1) (B)₃SiH + (L) → (B)₄Si
(c2) (A)(B)₂SiH + (M) → (A)Si(B)₃
(c3) (B)₃SiH + (O) → (B)₃Si(G)
(c4) (A)(C)₂SiH + (Q) → (A)(C)₂Si(D)
(c5) (B)(C)₂SiH + (N) → (B)(C)₃Si
(c6) (B)(C)₂SiH + (M) → (B)₂Si(C)₂
(c7) CH₃(A)(B)SiH + (M) →
(A)(B)(CH₃)SiC₂H₄C₆F₁₂C₂H₄Si(A)(B)(CH₃)
wherein the letters in parentheses again represent the above defined groups.

Thus, by combining the above schemes type (i), (ii) and (iii) in convenient order, different final products of the type I and II can be obtained. This is illustrated by the following structures:
(C₆F₁₃C₂H₄)₄Si
(C₆F₁₃C₂H₄)₃Si(C₂H₄CF₃)
(C₆F₁₃C₂H₄)₃Si(C₃H₆C₆F₁₃)
(C₆F₁₃C₂H₄)₃Si(C₂H₆(HFP)(VF₂)C₄F₉)
(C₆F₁₃C₂H₄)₂Si(C₂H₄CF₃)₂
(C₆F₁₃C₂H₄)₂Si(C₂H₄(HFP)C₄F₉)₂
(C₆F₁₃C₂H₄)Si(C₂H₄(HFP)C₄F₉)₃
(C₆F₁₃C₂H₄)Si(C₂H₄CF(CF₃)₂)₂(C₂H₄CF₃) 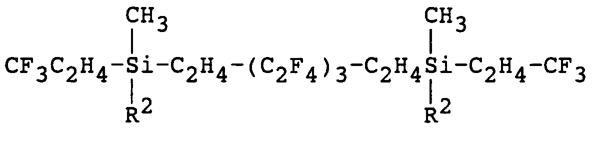
in which R² = -C₃H₆-CF(CF₃)CF₂-CF₂CH₂-C₂F₄C₂F₅ 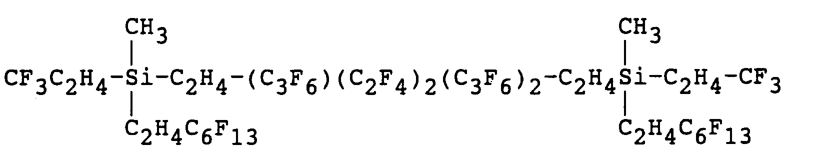
and
CF₃CFClCF₂CF(CF₃)C₂H₄Si(C₂H₄C₆F₁₃)₃
wherein HFP represents a hexafluoropropene residue and VF₂ represents a vinylidene fluoride residue.

The following examples are presented to further illustrate the method of this invention. All parts and percentages in the examples are on a weight basis and all measurements were obtained at 25°C. unless indicated to the contrary.

### Example 1 - Preparation of (C₂F₅(C₂F₄)₂C₂H₄)₄Si

A fluorinated compound having the formula C₂F₅(C₂F₄)₂CH=CH₂ (obtained from PCR, Inc.) was reacted with HSiCl₃ at 120°C. in the presence of 200 ppm of H₂PtCl₆·6H₂O in 10% solution isopropyl alcohol in a sealed glass tube into which oxygen had been introduced. After reacting for 16 hours, the product was distilled to provide a compound of the formula C₆F₁₃C₂H₄SiCl₃ (a) with a yield of 90% (bp = 85°C. at 20 torr [2.67 kPa]). This silane was dissolved in ethyl ether-ethyl alcohol (1:1 by volume) and reacted with excess of 40% HF at 0°C., whereupon the mixture was poured into excess water, the ether solution collected, dried over Na₂SO₄ and the solvent distilled off. A product having the structure C₆F₁₃C₂H₄SiF₃ (b) was isolated. Silane (b) (0.1 moles) was diluted in 500 ml of anhydrous ethyl ether and added to a solution of 0.4 moles of C₆F₁₃C₂H₄MgI which was prepared from C₆F₁₃C₂H₄I and Mg previously activated by crystals of iodine in 0.3 molar ethyl ether solution. After 18 hours of reflux, the mixture was poured into iced 20% HCl; the ether layer was separated and washed with water. This was then treated with aqueous (40%) HF at 0°C. and the ether layer separated; the solvent was distilled and the trialkyl silane (c) was distilled at 93°C./20 torr [2.67 kPa] (80% yield). This product (c) exhibited a ²⁹Si-NMR chemical shift at +29.5 ppm (TMS).
(C₆F₁₃C₂H₄)₃SiF (c)
Eighty parts of silane (c) dissolved in 150 ml of ethyl ether were added slowly to 2.8 parts of LiAlH₄ suspended in 150 ml of ethyl ether in a 1 liter flask equipped with a stirrer and condenser. The mixture was heated at reflux overnight, then cooled and poured into an excess of 10% HCl. The ether layer was separated, dried over Na₂SO₄ and distilled to give 71 parts of hydrosilane (d) (yield = 95%). Analysis by ²⁹Si-NMR showed a shift at -2 ppm (TMS;s).
(C₆F₁₃C₂H₄)₃SiH (d)
Sixty-four parts of the silane (d), 25 parts of the olefin C₆F₁₃CH=CH₂ and 0.3 ml of a 10% solution chloroplatinic acid in isopropanol were placed in a glass tube. The tube was evacuated, then filled with oxygen (0.6 atm absolute [606 kPa]), sealed and heated at 110°C. while stirring for 18 hours. The reaction product was recovered, filtered, distilled at 150 to 160°C. (10⁻³ torr [0.133 Pa]) from the olefin to provide 68 parts of a tetraalkyl silane (e) in 80% yield.
(C₆F₁₃C₂H₄)₄Si (e)
Silane (e) showed a ²⁹Si-NMR chemical shift at +8.35 ppm (TMS). The viscosity of silane (e) at 25°C., as measured with a cone-plate viscosimeter, was 107 cP (mPa·s); at 100°C. it was 6 cP (mPa·s). The specific gravity was 1.72 g/ml and the refractive index was n²⁰_{D} = 1.3301. Considering the composition, the inert nature and the symmetry of the structure that corresponds to a very low polarity of the molecule, it was possible to predict a dielectric constant of about 2, according to the value of electronic polarization assumed to be very near to the molar polarization of the Mosotti-Clausius equation. In practical terms, a dielectric constant of 2 is characteristic of a very good insulating fluid. Analysis by DSC showed that the silane (e) had a glass transition temperature of -73°C. These properties make this silane suitable for use as a lubricant for electro-mechanical applications, as coolant for electronics and as a hydraulic fluid for aeronautics.

### (Comparative) Example 1

An attempt was made to convert the fluorinated trialkylsilane (c) of Example 1 to the corresponding tetraalkylsilane (e), again defined in Example 1, by reacting it with a Grignard reagent of the formula C₆F₁₃C₂H₄-MgI. When this reaction was performed using diethylether, tetrahydrofuran or dibutylether, essentially no measurable conversion to the expected product was observed.

When the trialkylsilane (c) was reacted with C₆F₁₃C₂H₄-Li using either diethylether or dibutylether as the solvent, only a 10% yield of the product (e) was obtained.

The trialkylsilane (c) of Example 1 (0.0046 mole) was reacted with 0.15 mole of CF₃C₂H₄-Li (in diethyl ether; -30°C./5 hours and then 20°C./60 hours). The yield of (C₆F₁₃C₂H₄)₃SiC₂H₄CF₃ (b.p. = 110 to 112°C. at 0.001 torr [0.133 Pa]) was 58%, still considerably less than the 80% yield obtained in the preparation of product (e) of Example 1.

### Example 2 - Preparation of (C₂F₅(C₂F₄)₂C₂H₄)₃SiC₃H₆(C₂F₄)₂C₂F₅

An allyl derivative C₆F₁₃CH₂-CH=CH₂(a) was first prepared by adding a pure telomer C₆F₁₃I (270 parts) to allyl acetate (5% in excess of stoichiometric) and promoted by 1% benzoyl peroxide at 85°C. for 16 hours. The resulting fluoroalkyl acetate (70% conversion, 100% selectivity) showed ¹H-NMR chemical shifts in the region of 2.3 ppm (CF₂CH₂); 4.5 ppm (CHI); 4.4 ppm (CH₂-OAc); 2 ppm (CH₃). The fluoroalkyl acetate was added to a suspension of 14 parts of Zn dust in 300 ml ethanol and 2 ml HCl (36%) and heated at 50 to 70° for 4 hours. This suspension was filtered and the liquid washed with HCl (5%), dried over Na₂SO₄ and distilled to provide the allyl derivative (a).

The allyl derivative (a) (21.7 parts) was reacted with the hydrosilane (C₆F₁₃C₂H₄)₃SiH (54 parts), the latter being prepared according to the procedure of Example 1. The resulting product was distilled and a fraction (b) boiling at 170°C./10⁻³ torr (0.133 Pa) was obtained in 96% yield (based on the hydrosilane). This product (b) was subjected to ²⁹Si-NMR analysis and showed a chemical shift at +6.86 ppm (TMS); ¹H-NMR showed chemical shifts in the region of 0.7 to 1.05 ppm (CH₂Si), 1.6 to 1.8 ppm (CH₂CH₂CH₂) and 1.9 to 2.35 ppm (CH₂CF₂); ¹⁹F-NMR was also consistent with the expected structure:
(C₂F₅(C₂F₄)₂C₂H₄)₃SiCH₂CH₂CH₂(C₂F₄)₂C₂F₅ (b)
Product (b) was further analyzed and the refractive index was found to be n²⁰_{D} = 1.3340 and a glass transition temperature of -59°C.

### Example 3 - Preparation of (C₂F₅-C₂F₄-CF₂CF(CF₃)C₂H₄)₃SiC₂H₄(C₂F₆)₂C₂F₅

A telomer of the structure C₂F₅C₂F₄CF₂CF(CF₃)C₂H₄I
(a) was prepared by adding the 204 parts of the telogen C₂F₅C₂F₄I to a 500 ml Hastelloy™ autoclave, then adding under vacuum, 120 parts of HFP and reacting at 210°C. for 64 hours. The HFP was recovered, the product discharged and distilled to separate the telogen from the telomer (a) (bp 45°C. at 20 torr [2.67 kPa], conversion = 50%). Chemical shifts (ppm, CFCl₃) by ¹⁹F-NMR for product (a) were:

| CF₃ | CF₂ | CF₂ | CF₂ | -CF₂ | CF | -(CF₃)I |
|---|---|---|---|---|---|---|
| -82 | -127 | -123.7 | -121.8 | -107 | -145 | -73 |

Sixty parts of telomer (a) were charged to a 200 ml Hastelloy™ autoclave, which was further charged with CuCl (0.3 parts), ethanolamine (3 parts) and t-butyl alcohol (20 parts). The autoclave was sealed, evacuated, charged with ethylene gas at 35 atm (3.55 MPa) pressure and then heated at 130° to 145°C. for 10 hours. The autoclave was vented and the product was poured into water and recovered by extraction with Freon™ 113. The organic layer was dried over Na₂SO₄, distilled and the endcapped product (b) was separated at 76°C./20 torr [2.67 kPa] (conversion = 90%). C₄F₉CF₂-CF(CF₃)C₂H₄I (b)
NMR identification of (b) was as follows:
(b)

| C₄F₉CF₂ | -CF | (CF₃)CH₂ | CH₂I | |
|---|---|---|---|---|
| -118 | -183 | -74 | | (by ¹⁹F-NMR; ppm, CFCl₃) |
| | | +2.7 | +3.3 | (by ¹H-NMR; ppm, TMS) |

The two reactions were repeated to provide sufficient product for subsequent reactions.

The product (b) was used to prepare a Grignard reagent as follows. A 2 liter glass flask fitted with mechanical stirrer, condenser and thermometer was charged with 0.4 g of magnesium and heated under a nitrogen flow at 100°C., then cooled and the Mg was suspended in 150 ml of anhydrous ethyl ether. A crystal of iodine was added to the stirred suspension and then a solution of 0.24 moles of the above product (b) in 650 ml anhydrous ethyl ether was added dropwise. After one hour of stirring at 30 to 35°C., a solution of 0.1 mole of C₆F₁₃C₂H₄SiF₃, prepared according to the Example 1 and diluted in 300 ml of ethyl ether, was added. The mixture was refluxed for 24 hours and the final product separated and purified according to the procedure described in the Example 1. After the evaporation of the solvent the product was distilled at 120 to 125°C./2x10⁻² torr (2.67 Pa) to provide the silane (c) (50% yield based on the starting silane).
(C₄F₉CF₂-CF(CF₃)C₂H₄)₂Si(F)C₂H₄C₆F₁₃ (c)
Silane (c) was analyzed by ¹⁹F-NMR and by ²⁹Si-NMR where it was characterized by a doublet centered at +28.5 ppm (TMS). The product was added to an excess of LiAlH₄ in 200 ml of ethyl ether and reacted according to the procedure described in Example 1. After work up, hydrosilane (d) was recovered (94% conversion). This material was characterized by I.R. spectroscopy, where it showed an adsorption at 2140 cm⁻¹ corresponding to SiH and by ²⁹Si-NMR, where a singlet at -3.04 ppm (TMS) was observed.
(C₄F₉C₃F₆C₂H₄)₂Si(H)C₂H₄C₆F₁₃ (d)
The hydrosilane (d) (0.042 mole) was reacted with 0.05 mole of C₄F₉C₃F₆CH=CH₂ in the presence of 0.2 ml of a 10% solution chloroplatinic acid in isopropanol. This reaction was carried out in a glass flask wherein a flow of 2% (by volume) of oxygen in nitrogen was continuously bubbled into the mixture and the latter was stirred and heated at 110°C. overnight. The crude product was filtered and distilled at 124°C./10⁻³ torr (0.133 Pa), giving 38% yield of pure distilled silane (e):
(C₄F₉C₃F₆C₂H₄)₃SiC₂H₄C₆F₁₃ (e)
This liquid exhibited a glass transition temperature of -57°C. and a refractive index of n²⁰_{D} = 1.333.

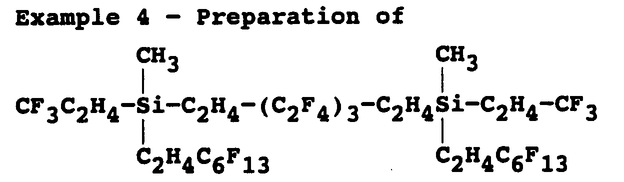

A one liter Hastelloy™ autoclave was charged, under vacuum, with 106 parts of IC₂F₄I (from PCR). The autoclave was sealed and connected by a stainless steel pipe to a cylinder containing tetrafluoroethylene (TFE) gas at 7 atm pressure (0.7 MPa). The pipe was evacuated and the TFE was introduced into the autoclave. The autoclave was sealed, heated at 210°C. for 16 hours and the pressure decreased to 2 atm (0.2 MPa). The charge of TFE was repeated and the reaction continued for another 24 hours, after which the reactor was vented. Upon analysis by gas liquid chromatography (SE column), it was observed that 90% of the product comprised 5 main components. The product was distilled and 15 g of IC₆F₁₂I (a) were separated, boiling at 70°C. (8 to 10 torr [1.07 to 1.33 kPa]). The operation was repeated 4 times. Fifty-five grams of IC₆F₁₂I were introduced into a 0.5 liter autoclave along with 0.5 g of CuI and 50 ml of t-butyl alcohol. The autoclave was sealed, evacuated and connected through a stainless steel pipe to an ethylene cylinder. Ethylene gas was introduced into the autoclave until a pressure of 35 atm (3.55 MPa) was attained. The autoclave was sealed and heated at 160°C. for 16 hours, after which the autoclave was vented and a solid mixture was recovered, dissolved in hot hexane, filtered and crystallized. The resulting pure product (b) was thus isolated (conversion of 80%; identified by ¹⁹F-NMR).
IC₂H₄C₆F₁₂C₂H₄I (b)
Product (b) was mixed in a glass flask equipped with a condenser, with 15g of KOH diluted in 100 ml of ethyl alcohol and ethylene glycol and the mixture refluxed for 3 hours. The resulting mixture was poured into excess water and the organic portion was dried over Na₂SO₄ and distilled. The conversion was complete and the diolefin product (c) was observed by ¹H-NMR to have chemical shifts in the region 5.8 to 6 ppm (TMS).
CH₂=CH-C₆F₁₂CH=CH₂ (c)
The diolefin (c) was reacted with the silane CH₃Si(H)(C₂H₄CF₃)Cl. This reaction was run in the presence of 50 ppm of chloroplatinic acid in a 25% solution of isopropanol at 100°C. for 16 hours, in an atmosphere of 2% oxygen (by volume) in nitrogen. The resulting liquid product (d) had the structure 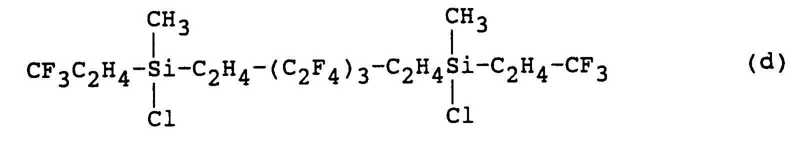
The product (d) was filtered and identified by ¹H-, ¹⁹F-, ²⁹Si-NMR. The characteristic ²⁹Si-NMR chemical shift was at 31.41 ppm (TMS) and the ¹H-NMR chemical shifts were in the region of 0.52 ppm, 1.04 to 1.09 ppm and 2.05 to 2.35 ppm (TMS).

Into a 250 ml flask, equipped with condenser dropping funnel, stirrer, containing LiAlH₄ (2 parts) suspended in anhydrous ethyl ether (50 parts), there was added dropwise 35 parts of product (d) dissolved in 100 parts of anhydrous ethyl ether. The mixture was heated at reflux for 2 hours and then treated with 10% hydrochloric acid. After separation of the ether layer and drying with sodium sulfate, the ether was distilled to yield 30.2 parts (94.6% yield) of product (e). 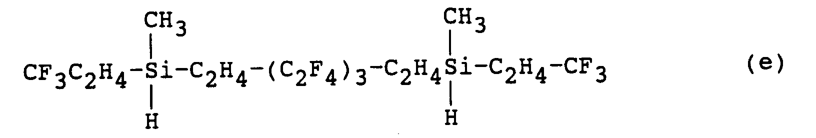
The product (e) showed I.R. adsorption at 2150 cm⁻¹ and ¹H-NMR showed chemical shifts at 0.15; 0.8 to 1; 1.95 to 2.25; and 3.9 to 4 ppm (TMS) and ²⁹Si-NMR showed chemical shift at -7.22 ppm (TMS).

Into a 25 ml round-bottomed flask equipped with a condenser and a magnetic stirrer were introduced 7.02 parts of product (e), 7.6 parts of tridecafluoro-1-octene (C₆F₁₃CH=CH₂) and 0.1 ml of hexachloroplatinic acid as a 10% solution in 2-propanol. The mixture was heated at 100°C. for 18 hours. Then it was filtered and vacuum distilled to eliminate any trace of olefin, to yield 13.1 parts (89.5% yield) of product (f): 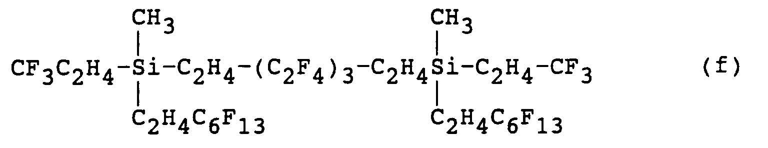
Overall yield was 84.7%.

The ¹H-NMR of product (f) showed chemical shifts at 0.1 to 0.15; 0.8 to 1; and 1.9 to 2.2 ppm (TMS). The ²⁹Si-NMR showed a chemical shift at +6.74 ppm (TMS). DSC analysis showed a glass transition temperature of -65°C. and the refractive index was n²⁰_{D} = 1.3580. It is believed that these properties would allow product (f) to be advantageously used as a lubricant for electro-mechanical application, hydraulic fluid for aeronautic applications and as a base fluid for greases. 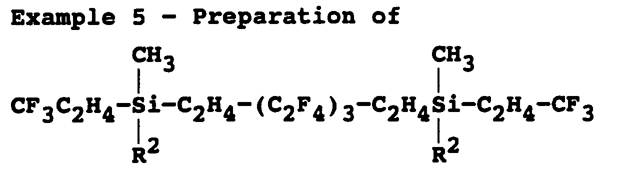
**where R² = -C₃H₆-CF(CF₃)CF₂-CF₂CH₂-C₂F₄C₂F₅**
An allyl-terminated cotelomer of the structure C₂F₅C₂F₄CH₂CF₂CF₂-CF(CF₃)-CH₂-CH=CH₂ was first prepared. Into a 500 ml Hastelloy™ autoclave equipped with mechanical stirrer were introduced 300 parts of telomer C₂F₅C₂F₄I (a) and 60 parts of vinylidene fluoride (VDF). The autoclave was sealed and heated at 210° to 230°C., the initial pressure at 230°C. being 70 bar (7.0 MPa). After 15 hours, the reactor was cooled, the gas vented and the crude product distilled at 40°C./20 torr (2.67 kPa) to provide a product (b) in 96% purity.
C₄F₉CH₂CF₂I (b)
Product (b) (290 parts) was reacted in the same autoclave with 120 parts of C₃F₆ (HFP) at 240°C. for 75 hours; the initial pressure at 240° was 80 bar. After venting the autoclave the crude product was distilled at 80°C./20 torr (2.67 kPa) to provide 200 parts of a product (c) having a purity of 90%.
C₄F₉CH₂CF₂-CF₂CF(CF₃)I (c)
Product (c) was characterized by ¹⁹F-NMR and the chemical shifts (ppm, CFCl₃) found were

| CF₃ | CF₂ | CF₂ | CF₂CH₂ | CF₂ | CF₂ | CF | (CF₃)I |
|---|---|---|---|---|---|---|---|
| -82 | -127 | -125 | -113 | -110 | -103 | -145 | -74 |

One hundred and seventy parts of product (c) were reacted with 5% excess over the stoichiometric ratio of allyl acetate in the presence of 1% weight of benzoyl peroxide at 80°C. A conversion of 80% of adduct (d) was obtained (100% selectivity).
C₄F₉CH₂CF₂C₃F₆CH₂-CHI-CH₂OAC (d)
This adduct was characterized by ¹H-NMR and showed chemical shifts similar to the acetate (a) of Example 3. To a suspension of 12 parts of Zn dust in 200 ml of ethyl alcohol, there was added 2 ml of 36% HCl and then 66 parts of adduct (d) added while the temperature was maintained at 60°C. for 4 hours. Upon cooling, the resulting product was filtered and then poured into excess acid water. The organic layer was recovered, dried over Na₂SO₄ and distilled to provide allyl derivative (e) at a conversion of 80%.
C₄F₉CH₂CF₂CF₂CF(CF₃)CH₂-CH=CH₂ (e)
The product (e) showed ¹H-NMR chemical shifts of CH₂ in the regions of 2.7 to 3.1 ppm and of vinyl in the region of 5.2 to 5.4 ppm (CH₂) and 5.7 to 5.9 ppm (CH) ¹⁹F-NMR showed the characteristic shift of tertiary CF group at -179 ppm (CFCl₃).

To a 200 ml flask equipped with a condenser and magnetic stirrer, there was added 32 parts of alpha,omega-fluoroalkylene disilane (e) of Example 4, 47 parts of the allyl derivative (e) of the instant example and 0.3 ml of a 10% solution of chloroplatinic acid in 2-propanol. This mixture was heated at 100°C. for 18 hours, filtered and distilled under vacuum to provide 60 g of disilane (f) were obtained. 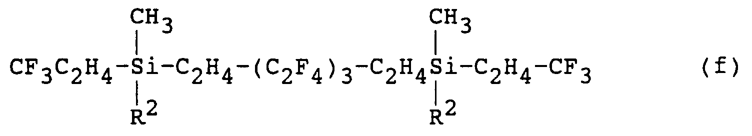
where R² = -C₃H₆-CF(CF₃)CF₂-CF₂CH₂-C₂F₄C₂F₅
The ²⁹Si-NMR of disilane (f) showed a characteristic chemical shift at 5.27 ppm (TMS). The DSC showed a glass transition temperature of about -50°C. and the refraction index n²⁰_{D} was 1.3640.

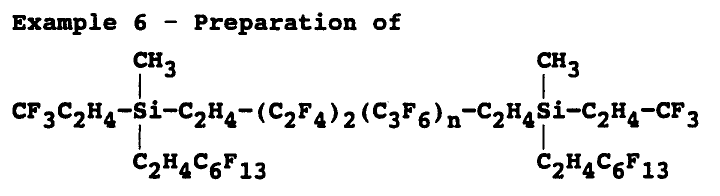

The procedures of Example 4 were used to react IC₂F₄I and TFE to provide a mixture of telomers of the general formula I(C₂F₄)ₙI (a). This telomer mixture was distilled to give a fraction (a') boiling in the range 60 to 70°C. at 20 torr (2.67 kPa) with average n=2, with less than 5% of n=3 as determined by gas chromatography and ¹⁹F-NMR analysis. One hundred parts of fraction (a') was reacted in an autoclave with 150 parts of hexafluoropropene (HFP) at 210 to 230°C. for 16 hours while the pressure changed from 60 to 35 atm (6.08 to 3.55 MPa). After venting the autoclave the product was discharged and a fraction boiling in the range of 65 to 85°C. at 10 torr (1.33 kPa) and composed of about 1:1 of the components (b¹:b²) was obtained.
I(C₂F₄)₂C₃F₆I (b¹)
IC₃F₆(C₂F₄)₂C₃F₆I (b²)
From gas liquid chromotography (GLC) and ¹⁹F-NMR analysis, the conversion to the products (b¹) and (b²) was about 50%.

The mixture (b¹, b²) was reacted according to Example 4 in the production of products corresponding to (b) to (f) of Example 4 to provide a final fluoroalkylene disilane mixture of structure (f): 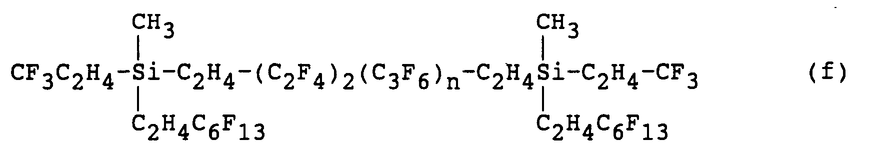
wherein n = 1, 2. The compound (f) was characterized by a ¹⁹F-NMR and found to be very similar to the product (f) of Example 4, but in this case there was absorption at -180 to -183 ppm (CFCl₃) due to the CF of the groups CF₂-CF(CF₃)CH₂ of the HFP.

### Example 7 - Preparation of {C₂F₅(C₂F₄)₂C₂H₄}₃SiC₂H₄CF₃

A 200 ml autoclave was charged with 69 parts of 1,1,2-tridecafluorooctene-1, 36 parts of 3,3,3-trifluoropropyldichlorosilane and 0.3 ml of a 10% solution of chloroplatinic acid in isopropanol. The autoclave was evacuated and then filled with 2% oxygen (by volume) in nitrogen, sealed and reacted at 100°C. for 16 hours. The autoclave was discharged and the product was filtered and distilled. A fraction boiling at 95 to 100°C. at 1 torr (13.3 Pa) was separated and analyzed by GLC which showed 95% of a component that, upon ²⁹Si-NMR evaluation, showed a chemical shift at +30.3 ppm (TMS). The ¹⁹F-NMR showed the characteristic chemical shift in agreement with the structure (a).
C₂F₅(C₂F₄)₂CH₂CH₂Si(C₂H₄CF₃)Cl₂ (a)
The above compound (a) (19.6 parts) was reacted with 2.74 parts of LiAlH₄ in 80 ml of anhydrous ethyl ether at reflux under nitrogen overnight. The resulting product was treated with 10% HCl at 0°C., dried and distilled at 95°C. (20 torr [2.67 kPa]) to provide 14.5 parts of a product that, upon IR analysis, showed the characteristic absorption of SiH at 2150 cm⁻¹ and upon ²⁹Si-NMR analysis, showed a chemical shift at 25.6 ppm (TMS), confirming the structure (b).
C₂F₅(C₂F₄)₂C₂H₄Si(C₂H₄CF₃)H₂ (b)
Product (b) (17.5 parts) was reacted overnight with 83 parts of H₂C=CHC₆F₁₃ and 0.3 ml of a 10% chloroplatinic acid solution in isopropanol in a 200 ml autoclave in the presence of 2% oxygen (by volume) in nitrogen at 110° to 115°C. The resulting product was filtered and distilled at 114 - 120°C. (10⁻³ torr [0.133 Pa]) to provide a yield of 40%. Analysis by ²⁹Si-NMR showed a chemical shift at 7.91 ppm (TMS) and ¹⁹F-NMR was in agreement with the structure (c).
{C₂F₅(C₂F₄)₂C₂H₄}₃SiC₂H₄CF₃ (c)
The product (c) had a glass transition temperature of -59°C., a refractive index of 1.3340, a viscosity of 171 cP (mPa·s) and a density of 1.743 g/ml.

### Example 8 - Preparation of (CF₃CFClCF₂CF(CF₃)C₂H₄)Si(C₂H₄C₆F₁₃)₃

A 70/30 molar ratio of CF₃CF(Cl)I/CF₂ClCF₂I (a), obtained by reaction at 20° to 100°C. of chlorotrifluoroethylene (CTFE), IF₅ and I₂ in the presence of AlBr₃, was distilled. This mixture (16.6 parts) was introduced into a 200 ml autoclave, whereupon 30 parts of HFP were introduced under vacuum. The autoclave was sealed and heated at 250°C. for 48 hours. The reactor was cooled, vented and the liquid product distilled to obtain 20 parts of product (b) that exhibited ¹⁹F-NMR chemical shifts as follows:

| CF₃ | CFCl | CF₂ | CFI | CF₃ |
|---|---|---|---|---|
| -77.5 | -130 to -134 | -101 to -107 | -141 | -73 |

Fifteen parts of the product (b) were introduced into a 200 ml autoclave along with 0.2 part of CuI in 20 ml of CH₃CN. The autoclave was then charged at 35 atm (3.55 MPa) with ethylene gas and a reaction was carried out at 130 to 150°C. while stirring overnight. The resulting mixture containing the adduct having the structure CF₃CFClCF₂CF(CF₃)CH₂-CH₂I (c) was slowly introduced through a glass tube to the bottom of a flask containing an excess of KOH in 1:1 solution of ethanol and ethylene glycol heated at 80°C. while an absolute pressure of 30 to 50 torr (4.0 to 6.67 kpa) was maintained to distill a mixture of alcohol and olefin (d).
CF₃CFClC₃F₆CH=CH₂ (d)
The product (d), which had ¹H-NMR chemical shifts in the region of 5.7 and 6.12 ppm, was reacted with a sample of the fluorotrialkyl silane (d) of Example 1, (C₆F₁₃C₂H₄)₃SiH, using the reactant ratio and procedure of Example 1, to obtain the tetralkyl silane (e). This structure was confirmed by ¹⁹F-NMR analysis.
(C₆F₁₃C₂H₄)₃SiC₂H₄C₃F₆CFClCF₃ (e).

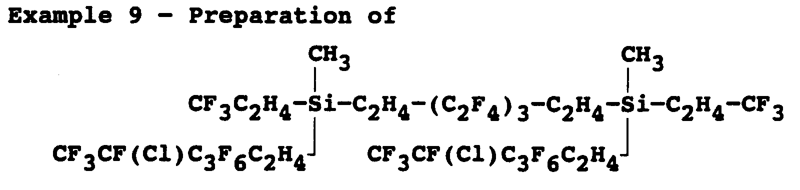

The hydrogen-functional intermediate (e) of Example 4 was reacted with CF₃CF(Cl)C₃F₆CH=CH₂ (i.e., (d) of Example 8) using the procedure of Example 4 to produce a disilane of the structure 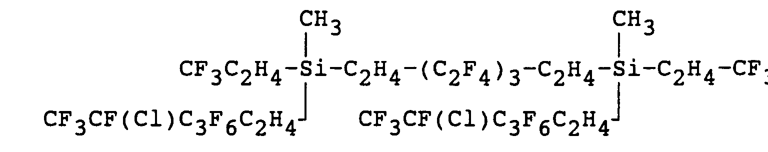
The above product was obtained in a yield of 80% and its structure was consistent with ²⁹Si and ¹⁹F-NMR analysis.

### Example 10 - Preparation of (C₆F₁₃C₂H₄)₃SiC₃H₆(C₃F₆)ₙ(C₂F₄)₂C₃H₆Si(C₂H₄C₆F₁₃)₃

A telechelic cotelomer of the structure CH₂=CHCH₂(C₃F₆)ₙ(C₂F₄)₂CH₂CH=CH₂ (n = 1, 2) was obtained from the components b¹ and b² of Example 6 according to the methods of Example 5, steps (c) through (e). This cotelomer was reacted with (C₆F₁₃C₂H₄)₃SiH in a molar ratio of 1:2.2, respectively. This reaction was performed at 100°C./18 hours in a sealed tube using chloroplatinic acid catalyst. The product, obtained in 95% yield, was a disilane of the formula:

(C₆F₁₃C₂H₄)₃SiC₃H₆(C₃F₆)ₙ(C₂F₄)₂C₃H₆Si(C₂H₄C₆F₁₃)₃

(n = 1, 2)

## Claims

1. A method for preparing a fluorinated silane having the formula R¹₄Si (I) said method comprising:
(A) reacting a silane of the formula R¹_{4-w}R⁸_{w}Si (III) with a hydride compound selected from lithium aluminum hydride or sodium borohydride to form a silane of the formula R¹_{4-w}H_{w}Si (V); and
(B) reacting said silane (V) with a compound selected from vinyl-terminated fluorotelomers or allyl-terminated fluorotelomers, wherein at least three R¹ of said silane (I) are selected from derivatives of (i) alkylene-terminated monovalent homotelomers of chlorotrifluoroethylene, tetrafluoroethylene, vinylidene fluoride or trifluoroethylene; (ii) cotelomers selected from cotelomers of chlorotrifluoroethylene or hexafluoropropene; (iii) cotelomers of tetrafluoroethylene and one member selected from hexafluoropropene, 1-H-pentafluoropropene and 2-H-pentafluoropropene; (iv) cotelomers of vinylidene fluoride and one member selected from said hexa- or pentafluoropropenes; (v) cotelomers of tetrafluoroethylene and perfluoroalkyl vinyl ether; (vi) cotelomers of tetrafluoroethylene, chlorotrifluoroethylene and a perfluoroalkyl vinyl ether; and (vii) cotelomers of tetrafluoroethylene, chlorotrifluoroethylene and hexafluoropropene, said telomers and cotelomers (i) through (vii) being bonded to the silicon atom in formula (I) by a divalent alkylene radical having 2 or 3 carbon atoms and any remaining R¹ groups being independently selected from alkyl radicals containing 1 to 4 carbon atoms, phenyl, perfluoroalkyl-substituted phenyl and fluoroalkyl radicals of the general formula R⁵(CH₂)_{y}-, in which R⁵ represents a perfluoroalkyl radical having from 1 to 6 carbon atoms and y is 2, 3 or 4 and wherein w is 1 or 2 and R⁸ is selected from Cl, F and OCH₃ radicals.

2. The method according to claim 1, wherein said at least one R¹ group of said silane (I) is selected from
CF₃C₂H₄- ,
C₂F₅(C₂F₄)_{q}C₂H₄- ,
C₂F₅(C₂F₄)_{q}CF₂CF(CF₃)-C₂H₄- ,
(CF₃)₂CFC₂H₄- ,
C₄F₉(CH₂CF₂)ₚCF₂-CF(CF₃)C₂H₄- ,
C₄F₉(CH₂CF₂)ₚCF₂-CF(CF₃)CH₂-CH₂CH₂- ,
C₂F₅(C₂F₄)_{q}-CH₂CH₂CH₂- and
F(CF₂CFCl)ₚ-CF₂CF(CF³)C₂H₄- ,
wherein q = 1, 2 or 3 and p = 1, 2 or 3.

3. The method according to claims 1 or 2 wherein w of said formulas (III) and (V) is 1 and the R⁸ group of said formula (III) is F.

4. A method for preparing a fluorinated silane having the formula R²₃Si(R³SiR⁴₂)_{z}R³SiR²₃ (II) comprising:
(A) reacting a silane of the formula R⁸_{w}R²_{3-w}Si(R₃-SiR⁴₂)_{z}R³SiR⁸_{w}R²_{3-w} (IV) with a hydride compound selected from lithium aluminum hydride or sodium borohydride to form a silane of the formula H_{w}R²_{3-w}Si(R³SiR⁴₂)_{z}R³SiR²_{3-w}H_{w} (VI); and
(B) reacting said silane (VI) with a compound selected from vinyl-terminated fluorotelomers or allyl-terminated fluorotelomers, wherein at least two of the R² and, when z ≠ 0, at least one R⁴ of said silane (II) is independently selected from the derivatives of (i) alkylene-terminated monovalent homotelomers of chlorotrifluoroethylene, tetrafluoroethylene, vinylidene fluoride or trifluoroethylene; (ii) cotelomers selected from cotelomers of chlorotrifluoroethylene or hexafluoropropene; (iii) cotelomers of tetrafluoroethylene and one member selected from hexafluoropropene, 1-H-pentafluoropropene and 2-H-pentafluoropropene; (iv) cotelomers of vinylidene fluoride and one member selected from said hexa- or pentafluoropropenes; (v) cotelomers of tetrafluoroethylene and perfluoroalkyl vinyl ether; (vi) cotelomers of tetrafluoroethylene, chlorotrifluoroethylene and a perfluoroalkyl vinyl ether; and (vii) cotelomers of tetrafluoroethylene, chlorotrifluoroethylene and hexafluoropropene; said telomers and cotelomers (i) through (vii) being bonded to the silicon atom in formula (II) by a divalent alkylene radical having 2 or 3 carbon atoms and any remaining R² and R⁴ groups being independently selected from alkyl radicals containing 1 to 4 carbon atoms, phenyl, perfluoroalkyl-substituted phenyl and fluoroalkyl radicals of the general formula R⁵(CH₂)_{y}-, in which R⁵ represents a perfluoroalkyl radical having from 1 to 6 carbon atoms and y is 2, 3 or 4 and wherein w is 1 or 2, R⁸ is selected from Cl, F and OCH₃ radicals, z has an average value of 0 to 4 and R³ is a derivative of an alkylene-terminated telechelic divalent telomer or cotelomer represented by the formula: -CₘH₂ₘ-(R⁶)CFCF₂-(CₚF₂ₚ)_{q}(C₂ClF₃)ᵣ-R_{f}-(C₂ClF₃)ᵣ-(CₚF₂ₚ)_{q}-CF₂ CF(R⁶)-CₘH₂ₘ- in which R_{f} represents a perfluoroalkylene radical containing from 2 to 6 carbon atoms, R⁶ is fluorine or trifluoromethyl, m is 2 or 3, with the proviso that -CₘH₂ₘ- represents a linear radical, the value of p is 2 or 3, r is 0 or a positive integer from 1 to 6, q is 0 or a positive integer from 1 to 6 and (r+q) is from 2 to 12.

5. The method according to claim 4 wherein at least one R² group of formula (II) is selected from the group CF₃C₂H₄-, CC₂F₅(C₂F₄)_{q}C₂H₄-, C₂F₅(C₂F₄)_{q}CF₂CF(CF₃)-C₂H₄-, (CF₃)₂CFC₂H₄-, C₄F₉(CH₂CF₂)ₚCF₂-CF(CF₃)C₂H₄-, C₄F₉(CH₂CF₂)ₚCF₂-CF(CF₃)CH₂-CH₂CH₂-, C₂F₅(C₂F₄)_{q}-CH₂CH₂CH₂- and F(CF₂CFCl)ₚ-CF₂CF(CF₃)C₂H₄-, wherein q = 1, 2 or 3 and p = 1, 2 or 3.

6. The method according to claims 4 or 5 wherein w of said formulas (IV) and (VI) is 1 and the R⁸ group of said formula (IV) is F.

7. The method according to claim 6 wherein z of said formulas (II), (IV) and (VI) is 0 or 1.

8. A fluorinated silane having a structure selected from C₂F₅(C₂F₄)₂C₂H₄)₄Si, (C₂F₅(C₂F₄)₂C₂H₄)₃SiCH₂CH₂CH₂(C₂F₄)₂C₂F₅, (C₄F₉C₃F₆C₂H₄)₃SiC₂H₄C₆F₁₃, 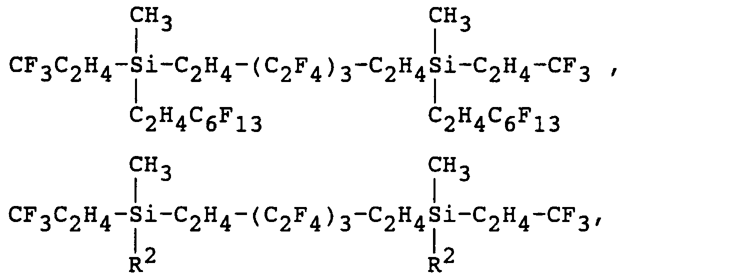 wherein R² = -C₃H₆-CF(CF₃)CF₂-CF₂CH₂-C₂F₄C₂F₅ , 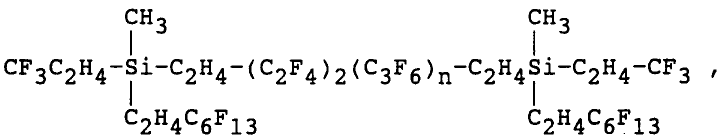 {C₂F₅(C₂F₄)₂C₂H₄}₃SiC₂H₄CF₃, (C₆F₁₃C₂H₄)₃SiC₂H₄C₃F₆CFClCF₃, 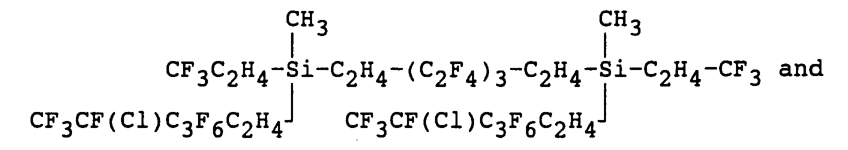 (C₆F₁₃C₂H₄)₃SiC₃H₆(C₃F₆)ₙ(C₂F₄)₂C₃H₆Si(C₂H₄C₆F₁₃)₃ where n = 1 or 2.
